# EUROPÄISCHE PATENTSCHRIFT

(11) **EP 1 473 501 B1**
(45) Veröffentlichungstag und Bekanntmachung des Hinweises auf die Patenterteilung: **25.06.2008**
(21) Anmeldenummer: 03008166.5
(22) Anmeldetag: 08.04.2003
(51) Int. Cl.: F16L 5/02, H02G 3/22

(54) **Modulare Schottung zur dichten Durchführung von Kabeln und Rohrleitungen durch Bauteile aller Art (mit nachweisbarer Dichte)**
Modular sealed feedthrough for cables and ducts through different sorts of components, with controled seal
Cloison modulaire pour traversée étanche de cables et tuyaux à travers divers composants avec étancheite controlée

(43) Veröffentlichungstag der Anmeldung: 03.11.2004
(73) Patentinhaber: Roxtec AB, 371 23 Karlskrona (SE)
(72) Erfinder:
(74) Vertreter: Karlsson, Leif Gunnar Börje

(56) Entgegenhaltungen:
- EP-A- 0 429 916
- DE-U- 20 116 654
- DE-U- 29 605 883
- US-A- 4 901 956

## Beschreibung

Die Erfindung betrifft eine modulare Schottung zur dichten Durchführung von Kabeln und Rohrleitungen durch Bauteile aller Art mit aus zwei quaderförmigen Teilen mit jeweils einer halbzylindrischen Ausnehmung bestehenden Modulen, die entweder ein Kabel, eine Rohrleitung oder ein Füllstück abdichtend umschließen, wobei jedes quaderförmige Teil eines Modules aus zwei Teilquadern besteht, die in Längsrichtung des Kabels oder der Rohrleitung hintereinander angeordnet und über mindestens einen Abstandhalter miteinander verbunden sind.

Derartige Module sind aus der EP 0 429 916 B1 und der US-A-4 901 956 bekannt. Die Module werden jeweils zu mehreren nebeneinander und übereinander in einem Rahmen in einer Wand oder einer Decke eingelegt, wobei die Auswahl und die Abmessungen rasterplanmäßig aufeinander abgestimmt werden und je nach Anzahl und Stärke der durchzufuhrenden Leitungen die Füllstücke aus den Modulen entfernt und die Leitungen eingelegt werden. Jeweils zwischen zwei Schichten von Modulen werden Ankerplatten eingelegt, die sich an dem Rahmen abstützen und damit ein Herausrutschen der Module aus dem Rahmen verhindern. Abschließend wird über eine Keildichtung ein Pressdruck auf die Module ausgeübt, der die Module soweit zusammenpresst und verformt, so dass eine möglichst vollständige Abdichtung der Durchführung gegen drückendes Wasser, Feuer und Gas entsteht. Es können auch runde Stopfrahmen Anwendung finden, die in einer Kernbohrung eingesetzt werden, dabei wird der zur Abdichtung notwendige Druck durch Festziehen von Spannbolzen erzeugt.

Ein Problem dabei ist, die Dichtigkeit dieser modularen Abschottungssysteme festzustellen. Dabei ist die aufwendigste Möglichkeit, den gesamten Raum abzuschlie-βen und mit Gas oder Druckluft zu fluten. Mit Hilfe von Manometern kann dann ein möglicher Druckabfall festgestellt werden. Diese Methode scheidet schon aufgrund des konstruktiven und wirtschaftlichen Aufwandes in den meisten Fällen aus.

Daher hat man diese Problem dadurch gelöst, dass man sogenannte Doppelschotts verwendet, wobei man zwei gleichartige Durchführungen parallel zu einander in einen entsprechenden größeren Rahmen in einer Wand eingesetzt hat. Hierdurch entsteht ein Zwischenraum zwischen den beiden Schottwänden, in den ein Prüfdruck gepumpt wird, um durch eine zeitabhängige Messung einen möglichen Druckabfall festzustellen. Sofern eine der beiden Schottwände undicht ist, wird das Gas vom höheren zum niedrigeren Druckpotential entweichen und die Undichtigkeit kann mit Hilfe eines Lecksuchsprays lokalisiert werden Ein derartiges Doppelschott stellt aber keine wirtschaftliche Lösung dar, da die Materialkosten mindesten um den Faktor 2 größer sind und auch die Montagezeiten erheblich länger sind. Ein derartiges aufwendiges Doppelschott wird daher auch nur in hochexplosiven Bereichen von einigen Chemieanlagen oder zu Brandschutzzwecken verwendet.

Es sind sehr viele Einzelschottsysteme in sicherheitsrelevanten Anlagen, z.B in explosionsgeschützten Anlagen, u.a. in Gasdruckregelstationen, im Einsatz Ob sie aber wirklich gasdicht sind, d.h. im Störfall das Gas nicht diffundieren lassen, kann man nach der Montage eines modularen Schottes nicht eindeutig bestätigen.

In der DE 101 50 075 ist eine modulare Schottung als Einzelschott beschrieben, bei dem unmittelbar nach der Montage eine Prüfung auf Gasdichtigkeit vorgenommen werden kann. Dabei weist jedes Modul in seinen äußeren Dichtungsflächen umlaufende, quer zur Durchführungsrichtung der Kabel oder Rohrleitungen verlaufende Ausnehmung auf, in mindestens einer der Ausnehmungen mindestens eine Bohrung vorgesehen ist, die bis an eine äußere Mantelfläche des Kabels, der Rohrleitung oder des Füllstückes heranreicht. Vorzugsweise sind zwei Bohrungen vorgesehen, so dass die Ausnehmungen jeder Dichtungsfläche mit einer Bohrung versehen ist.

Auf diese Weise kann innerhalb des Schottes der notwendige Prüfraum geschaffen werden, indem ein kommunizierendes System von Rohrleitungen hergestellt wird, das sämtliche abdichtenden Flächen der Module erreicht und bei Beaufschlagung mit einem Prüfdruck etwaige Undichtigkeiten sofort und problemlos festgestellt und beseitigt werden können.

Es hat sich jedoch gezeigt, dass die Herstellung derartiger Module mit Ausnehmungen und Bohrungen vergleichsweise aufwendig ist, insbesondere dann, wenn die halbzylindrischen Ausnehmungen in den Modulen mit lamellenartigen Einlagen zur Anpassung des Modules an unterschiedliche Durchmesser der Kabel oder Rohrleitungen versehen sind Auch hat sich herausgestellt, dass außer dem Bereich der Bohrungen nicht sichergestellt werden kann, dass der Prüfdruck tatsächlich auch die äußeren Mantelflächen der Kabel oder Rohrleitungen vollständig erreicht.

Aufgabe der vorliegenden Erfindung ist es daher, ein modulares Schott der eingangs genannten Art zu schaffen, das einfach und kostengünstig hergestellt werden kann und bei dem sichergestellt werden kann, dass sämtliche zu dichtende Flächen der durchgeführten Leitungen und der Module vollständig auf Dichtheit geprüft werden können.

Diese Aufgabe wird erfindungsgemäß dadurch gelöst, dass die Teilquader jeweils benachbart ihrer Außenkanten Ausnehmungen aufweisen, in sie Stifte der Abstandshalter hineinragen.

Dies hat den Vorteil, dass bei der Herstellung der Module diese lediglich in kürzere Teilstücke geschnitten und mit Ausnehmungen für die Abstandhalter versehen werden müssen. Ferner entsteht ein einheitlicher Prüfraum zwischen den jeweiligen Teilquadern, der das Gas oder die Druckluft vollständig sowohl an die Dichtungsflächen der Module als auch an die Außenflächen der Kabel oder Rohrleitungen gelangen lässt.

Weitere Einzelheiten der Erfindung ergeben sich der aus der nachfolgenden ausführlichen Beschreibung von bevorzugten Ausführungsform der Erfindung sowie den beigefügten Zeichnungen, in denen diese Ausführungsformen beispielsweise veranschaulicht sind.

In den Zeichnungen zeigen:

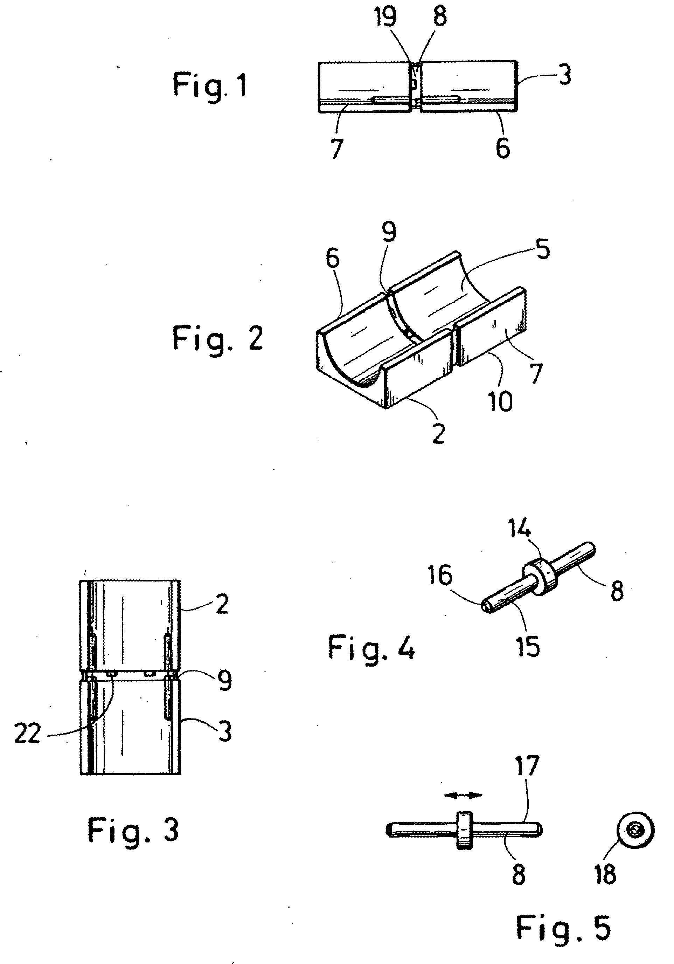

- Fig. 1: Eine Seitenansicht eines aus zwei Teilquadern bestehenden quaderförmigen Teiles mit eingesetztem Abstandhalter;
- Fig. 2:: eine perspektivische Darstellung des quaderförmigen Teiles gemäß Fig. 1;
- Fig. 3:: eine Draufsicht auf ein quaderförmiges Teil gemäß Fig. 1;
- Fig. 4:: eine Draufsicht auf einen mit einem Ringflansch versehenen Abstandshalter;
- Fig. 5:: eine Draufsicht auf einen Abstandhalter mit aufzuschiebendem Zwischenring;

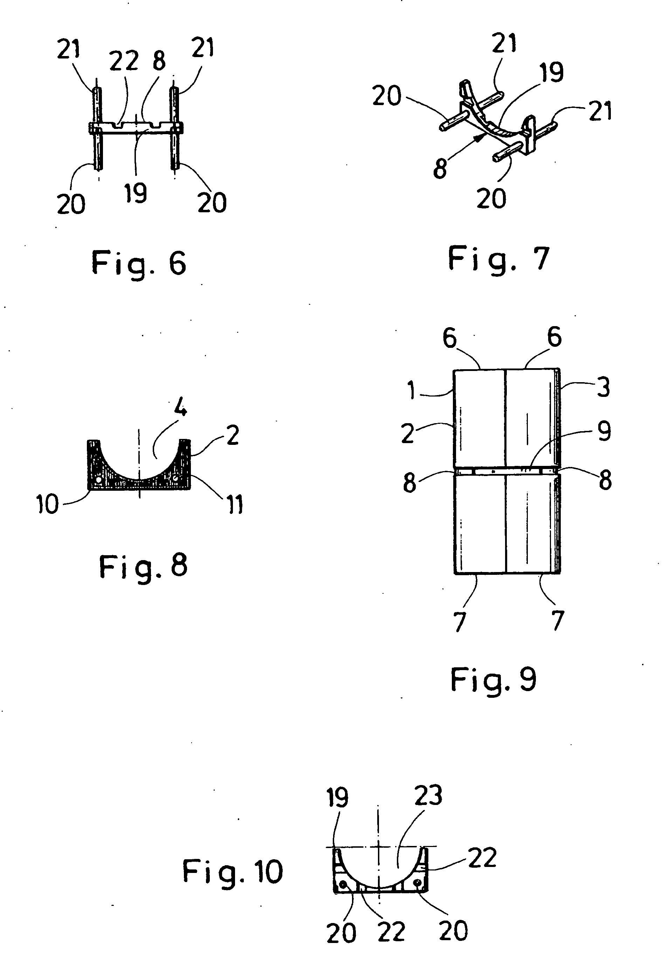

- Fig. 6: eine Draufsicht auf einen Abstandhalter mit Rahmenteil und vier Stiften;
- Fig. 7:: eine perspektivische Ansicht eines Abstandhalters gemäß Fig. 6;
- Fig. 8:: die einem Abstandhalter zugekehrte Stirnansicht eines Teilquaders gemäß Fig. 1 und
- Fig 9:: ein Modul in Seitenansicht.

Eine modulare Schottung zur dichten Durchführung von Kabeln und Rohrleitungen durch Bauteile aller Art besteht aus Modulen 1, die aus zwei quaderförmigen Teilen 2, 3 mit jeweils einer halbzylindrischen Ausnehmung 4, 5, die entweder ein Kabel, eine Rohrleitung oder ein Füllstück abdichtend umschließen, wobei jedes quaderförmige Teil 2, 3 aus zwei Teilquadern 6, 7 besteht, die in Längsrichtung des Kabels oder der Rohrleitung hintereinander angeordnet sind und die jeweils mindestens über einen Abstandhalter 8 miteinander verbunden sind

Die Abstandhalter 8 sind in der Weise ausgebildet, dass sie zwischen zwei Teilquadern 6, 7 einen Zwischenraum 9 freihalten. Jeder Teilquader 6, 7 weist jeweils benachbart seiner Außenkanten 10 Ausnehmungen 11 auf, in die Stifte 12 der Abstandhalter 8 hineinragen Ein Abstandhalter 8 kann aus einem Stift 13 mit einem Ringflansch 14 in seiner Mitte bestehen, und mit seinen einander abgewandten Enden 13 in die Ausnehmungen 12 der Teilquader 6, 7 hineinragen. Ein Abstandhalter 8 kann auch in der Weise ausgebildet sein, dass er aus einem Stift 17 besteht, über den ein Zwischenring 18 oder eine oder mehrere Unterlegscheiben übergeschoben werden kann. Ein Abstandhalter 8 kann auch aus einem Rahmenteil 19 bestehen, der an seinen den Ausnehmungen 11 der Teilquader 6, 7 zugewandten Bereichen jeweils zwei, einander abgewandte Stifte 20, 21 aufweist. Vorzugsweise weist jeder Rahmenteil 19 vier Stifte 20, 21 auf. Der Rahmenteil 19 ist mit in seinen Querrichtungen verlaufenden Ausnehmungen 22 versehen, durch die ein Prüfmedium durchströmen kann Jeder Rahmenteil 19 ist mit seinen Außenabmessungen in der Weise denjenigen der Module 1 angepasst, dass er diese äußeren Abmessungen unterschreitet und insoweit im Zwischenraum 9 einen umlaufenden Druckraum frei lässt. Der Rahmenteil 19 weist seinerseits eine halbzylindrische Ausnehmung 23 auf, deren Radius denjenigen der halbzylindrischen Ausnehmung der Teilquader 6, 7 in der Weise Überschreitet, dass in diesem Bereich zwischen der halbzylindrischen Ausnehmung 23 und einer äußeren Mantelfläche eines Kabels oder einer Rohrleitung ein für das Prüfmedium zugänglicher Ringraum verbleibt.

Die Module 1 werden in der Weise vormontiert an den Ort ihrer Verwendung geliefert, dass die Teilquader 6, 7 jeweils mit den Abstandshaltern 8 zusammengesteckt und jeweils zwei quaderförmige Teile 2 mit einen Füllstück zu einem Modul zusammengesetzt werden. Die Module 1 werden wie üblich in einen Rahmen eingelegt, der in einer Öffnung einer Wand eingebaut ist Jeweils zwischen zwei Lagen von Modulen 1 übereinander sind Ankerscheiben eingelegt, die die Mudule 1 gegen Herausrutschen aus dem Rahmen sichern Die Ankerscheiben weisen an ihren Zwischenräumen 9 benachbarten Bereichen Durchgangsbohrungen auf. Die Seiten der Ankerscheiben sind zusätzlich jeweils dreieckig ausgestanzt. Dadurch bildet eine Mehrzahl von Modulen 1 miteinander und mit dem sie umgebenden Rahmen ein kommunizierendes System aus Dieses besteht aus einem Netz von Leitungen, das im Inneren des geschlossenen Schotts ein prüfbares Gasvolumen aufweist. An dieses Netz sind Durchgänge angeschlossen, die eine das Schott abschließende Keildichtung in Richtung auf die ihr zugewandte obere Pressfläche des Rahmens durchdringen. Diese Keildichtung ist mit umlaufenden Ausnehmungen zur Aufnahme des Prüfmediums versehen.

Eines der Module 1 ist mit einer verschließbaren Druckluftkupplung versehen, die abdichtend in den halbzylindrischen Ausnehmungen 4, 5 der quaderförmigen Teile 2 und 3 der Module eingesetzt ist und die über ein einen Druckverlust anzeigendes Manometer mit einer Druckluftquelle verbunden ist

Unmittelbar nach Einbau der modularen Schottung kann mit Hilfe eines üblichen Baukompressors und dem Manometer festgestellt werden, ob das System dicht oder undicht ist Hierfür wird vorzugsweise ein Prüfdruck von ca 4 bar in das kommunizierende System gepresst und mit Hilfe des Manometers der im Fall der Undichtigkeit sofort ablesbare Druckabfall gemessen. Wird zwischen dem Netz und der "Außenwelt" eine Undichtigkeit festgestellt, so kann mit Hilfe des handelsüblichen blasenbildenden Lecksuchsprays ermittelt werden, ob beide Seiten oder nur eine Seite des Moduls 3 undicht ist.

Wenn eine Undichtigkeit festgestellt wird, kann entweder durch Wiederholung der Montage des betreffenden Moduls 1 die Undichtigkeit beseitigt werden oder aber, wenn dies nicht gelingt, ein anderes Modul 1 eingesetzt werden. Auf diese Weise können die Module 1 auch auf Fabrikationsfehler untersucht werden

## Patentansprüche

1. Modulare Schottung zur dichten Durchführung von Kabeln und Rohrleitungen durch Bauteile aller Art mit aus zwei quaderförmigen Teilen mit jeweils einer halbzylindrischen Ausnehmung bestehenden Modulen, die entweder ein Kabel, eine Rohrleitung oder ein Füllstück abdichtend umschließen, wobei jedes quaderförmige Teil (2, 3) aus zwei in Längsrichtung des Kabels oder der Rohrleitung hintereinander angeordneten Teilquadern (6, 7) besteht, die über mindestens einen Abstandhalter (8) miteinander verbunden sind, **dadurch gekennzeichnet, dass** die Teilquader (6, 7) jeweils benachbart ihrer Außenkanten (10) Ausnehmungen (11) aufweisen, in die Stifte (12) der Abstandhalter (8) hineinragen.

2. Modulare Schottung nach Anspruch 1, **dadurch gekennzeichnet, dass** die Abstandhalter (8) zwischen jeweils zwei Teilquadern (6, 7) einen Zwischenraum (9) freihalten.

3. Modulare Schottung nach Anspruch 1 bis 3, **dadurch gekennzeichnet, dass** ein Abstandhalter (8) aus einem Stift (13) besteht, der in seiner Mitte einen Ringflansch (14) aufweist und mit seinen einander abgewandten Enden (15, 16) in jeweils eine Ausnehmung (11) eines Teilquaders (6, 7) hineinragt

4. Modulare Schottung nach Anspruch 1 bis 3, **dadurch gekennzeichnet, dass** ein Abstandhalter (8) aus einem Stift (17) besteht, über den mindestens ein Zwischenring (18) übergeschoben ist.

5. Modulare Schottung nach Anspruch 1 bis 3, **dadurch gekennzeichnet, dass** ein Abstandhalter (8) aus einem Rahmenteil (19) besteht, der an seinen den Ausnehmungen (11) der Teilquader (6, 7) zugewandten Bereichen jeweils zwei einander abgewandte Stifte (20, 21) aufweist

6. Modulare Schottung nach Anspruch 6, **dadurch gekennzeichnet, dass** jeder Rahmenteil (19) vier Stifte (20, 21) aufweist

7. Modulare Schottung nach Anspruch 1 bis 3, 6 und 7, **dadurch gekennzeichnet, dass** jeder Rahmenteil (19) mit ein Prüfmedium durchlassenden Ausnehmungen (22) versehen ist.

8. Modulare Schottung nach Anspruch 1 bis 3, 6 bis 8, **dadurch gekennzeichnet, dass** jeder Rahmenteil (19) in seinen Außenabmessungen diejenigen der Module (1) unterschreitet.

9. Modulare Schottung nach Anspruch 1 bis 3, 6 bis 9, **dadurch gekennzeichnet, dass** jedem Rahmenteil (19) eine halbzylindrische Ausnehmung (23) aufweist, deren Radius denjenigen der quaderförmige Teile (2, 3) überschreitet.

## Claims

1. Modular partition for sealed feed-through of cables and piping through all sorts of components, having modules formed of two block formed parts, each having a semicylindrical notch, which modules sealingly surround either a cable, a piping or a blind, wherein each block formed part (2, 3) consists of two sub blocks (6, 7), which are arranged after each other in the longitudinally direction of the cables or piping and connected to each other by means of at least one spacer (8), **characterized in that** the sub blocks (6,7) each have openings (11) adjacent their outer edges (10), into which pins (12) of the spacers (8) projects.

2. Modular partition of claim 1, **characterized in that** the spacer (8) keeps an interspace (9) open between two sub blocks (6, 7).

3. Modular partition of claim 1 to 3, **characterized in that** one spacer (8) is formed of a pin (13), having a ring flange (14) at the middle, and with the opposite ends (15,16) each projecting into one opening (11) of one sub blocks (6, 7).

4. Modular partition of claims 1 to 3, **characterized in that** one spacer (8) is formed of a pin (17), across which at least one distance ring (18) is slid.

5. Modular partition of claims 1 to 3, **characterized in that** one spacer (8) is formed of a frame part (19), having two pins (20, 21), directed away from each other, at the areas facing the openings (11) of the sub blocks (6, 7).

6. Modular partition of claim 6, **characterized in that** each frame part (19) has four pins (20, 21).

7. Modular partition of claims 1 to 3, 6 and 7, **characterized in that** each frame part (19) has openings (22) letting test medium through.

8. Modular partition of claims 1 to 3, 6 to 8, **characterized in that** the outer dimension of each frame part (19) is less than that of the module (1).

9. Modular partition of claims 1 to 3, 6 to 9, **characterized in that** each frame part (19) has a semicylindrical notch (23), the radius of which is bigger than that of the block formed parts (2, 3).

## Revendications

1. Cloison modulaire pour le passage étanche de câbles et de tuyaux à travers divers composants comportant des modules se composant de deux pièces parallélépipédiques avec respectivement un évidement demi-cylindrique, lesquels modules entourent de manière étanche soit un câble, un tuyau soit une pièce de remplissage, chaque pièce parallélépipédique (2, 3) se composant de deux parties de parallélépipède (6, 7) disposées les unes derrière les autres dans le sens longitudinal du câble ou du tuyau, lesquelles sont reliées les unes aux autres par le biais d'au moins un écarteur (8), **caractérisée en ce que** les parties de parallélépipède (6, 7) présentent de manière respectivement adjacente à leurs bords extérieurs (10) des évidements (11) dans lesquels pénètrent des broches (12) des écarteurs (8).

2. Cloison modulaire selon la revendication 1, **caractérisée en ce que** les écarteurs (8) dégagent un espace intermédiaire (9) entre respectivement deux parties de parallélépipède (6, 7).

3. Cloison modulaire selon les revendications 1 à 3, **caractérisée en ce qu'**un écarteur (8) se compose d'une broche (13), qui présente en son milieu une bride annulaire (14) et pénètre avec ses extrémités (15, 16) opposées les unes aux autres dans respectivement un évidement (11) d'une partie de parallélépipède (6, 7).

4. Cloison modulaire selon les revendications 1 à 3, **caractérisée en ce qu'**un écarteur (8) se compose d'une broche (17), sur laquelle on fait glisser une bague intermédiaire (18) au moins au nombre de une.

5. Cloison modulaire selon les revendications 1 à 3, **caractérisée en ce qu'**un écarteur (8) se compose d'un cadre (19), qui présente au niveau de ses zones tournées vers les évidements (11) des parties de parallélépipède (6, 7), respectivement deux broches (20, 21) opposées l'une à l'autre.

6. Cloison modulaire selon la revendication 6, **caractérisée en ce que** chaque cadre (19) présente quatre broches (20, 21).

7. Cloison modulaire selon les revendications 1 à 3, 6 et 7, **caractérisée en ce que** chaque cadre (19) est doté d'évidements (22) laissant passer un agent d'essai.

8. Cloison modulaire selon les revendications 1 à 3, 6 à 8, **caractérisée en ce que** les dimensions extérieures de chaque cadre (19) sont inférieures à celles des modules (1).

9. Cloison modulaire selon les revendications 1 à 3, 6 à 9, **caractérisée en ce que** chaque cadre (19) présente un évidement demi-cylindrique (23), dont le rayon dépasse celui des pièces parallélépipédiques (2, 3).
